# EUROPEAN PATENT APPLICATION

(11) **EP 4 446 950 A1**
(43) Date of publication of application: **16.10.2024**
(21) Application number: 24166265.9
(22) Date of filing: 26.03.2024
(51) Int. Cl.: G06N 20/00

(54) **NEAR REAL-TIME FEATURE SIMULATION FOR ONLINE/OFFLINE POINT-IN-TIME DATA PARITY**

(30) Priority: 10.04.2023 US 202318132748
(71) Applicant: eBay Inc., San Jose, CA 95125 (US)
(72) Inventor: LI, Jie, San Jose, 95125 (US); LI, Xin, San Jose, 95125 (US); SHI, Junjuan, San Jose, 95125 (US); TANG, Yingting, San Jose, 95125 (US); WANG, Yiheng, San Jose, 95125 (US); YU, Yucai, San Jose, 95125 (US); ZHU, Guansheng, San Jose, 95125 (US)
(74) Representative: Müller-Boré & Partner Patentanwälte PartG mbB

(57) **Abstract**

Near real-time feature simulation for online/offline point-in-time data parity is described. A computing device may assign, to respective events from a series of events, a series of time stamps associated with a near real-time (NRT) variable. The computing device may simulate a delay latency associated with processing the respective events via an online processing environment based on the series of time stamps. The computing device may provide the series of events and the simulated delay latency to a machine-learning model configured to model an outcome of the series of events using the simulated delay latency.

## Description

### BACKGROUND

Machine learning refers to techniques implemented by computing devices to make predictions or decisions based on data without being explicitly programmed to do so, e.g., by a user. Instead, a machine-learning model is trained using training data. A machine-learning model refers to a computer representation that can be tuned (e.g., trained and retrained) based on inputs to approximate unknown functions. In particular, the term machine-learning model can include a model that utilizes algorithms to learn from, and make predictions on, known data by analyzing training data to learn and relearn to generate outputs that reflect patterns and attributes of the training data.

Feature engineering refers to a technique used to extract events as "features" that are usable to improve efficiency and accuracy in the training, retraining, and use of a machine-learning model. Time series data, for instance, may include multiple events that occur at particular points in time. In some examples, the time series data are stored and replayed to simulate near real-time (NRT) features in point-in-time. These simulated NRT features can be used as offline training data, where weights and parameters of the model are updated based on the training data until the machine-learning model is trained and ready for deployment.

However, the large volume of concurrent events in the time series data and inconsistent time delays for different types of events and different types of features that occur in online data processing are not accurately reflected in an offline simulation using conventional techniques. Because of these issues, conventional techniques for offline NRT feature simulation may fail to reflect the complexity of event time delay and timing for concurrent data processing in production, resulting in model refits when new NRT features are introduced and an undesirably long time-to-market for these models.

### SUMMARY

Near real-time feature simulation for online/offline point-in-time data parity is described. A computing device may assign, to respective events from a series of events, a series of time stamps associated with a near real-time (NRT) variable. The computing device may simulate a delay latency associated with processing the respective events via an online processing environment based on the series of time stamps. The computing device may provide the series of events and the simulated delay latency to a machine-learning model configured to model an outcome of the series of events using the simulated delay latency, thereby improving an online/offline feature match rate of the machine-learning model.

This Summary introduces a selection of concepts in a simplified form that are further described below in the Detailed Description. As such, this Summary is not intended to identify essential features of the claimed subject matter, nor is it intended to be used as an aid in determining the scope of the claimed subject matter.

### BRIEF DESCRIPTION OF THE DRAWINGS

The detailed description is described with reference to the accompanying figures. Entities represented in the figures are indicative of one or more entities and thus reference is made interchangeably to single or plural forms of the entities in the discussion.
FIG. 1 is an illustration of a digital medium environment in an example implementation that is operable to employ feature engineering logic generation and simulation techniques described herein.
FIG. 2 depicts an example implementation showing operation of the event manager module and the offline simulation module of FIG. 1 in greater detail.
FIG. 3 depicts an example implementation showing operation of the event manager module and the online event processing module of FIG. 1 in greater detail.
FIG. 4 depicts an example implementation of a roll-up computation performed by a machine-learning model to generate event outcomes.
FIG. 5 depicts a procedure in an example of implementing digital services by executing online event processing of a near real-time (NRT) variable and generating training data.
FIG. 6 depicts a procedure in an example implementation of simulating an offline NRT variable and training a machine-learning model.
FIG. 7 illustrates an example system including various components of an example device that can be implemented as any type of computing device as described and/or utilize with reference to FIGS. 1-6 to implement embodiments of the techniques described herein.

### DETAILED DESCRIPTION

### Overview

Event processing in digital services provided by a service provider system may utilize machine learning in order to track events and arrive at a corresponding conclusion. Event processing is generally implemented in real-time, where the executable service platform is configured to detect events and extract information based on the events from streams of information substantially as they occur. Thus, the use of machine learning for event processing in real world scenarios supports a timely response to the events, such as to identify attacks by malicious parties, opportunities, fraudulent versus non-fraudulent transactions, recommendations, and so forth.

However, the complexity of a real-time event processing as implemented in real-world practice is difficult to simulate in offline training scenarios. This is due to an inability to perform accurate point-in-time feature simulation in an offline environment, such as due large volumes of concurrent events in real-world time series data and inconsistent processing delays for different types of events and different types of features. For example, conventional offline training scenarios include replaying an event history and outcomes in order to train the model to make predictions regarding a new near real-time (NRT) feature. However, these conventional techniques do not account for the complex online operation environment and processing delays that result therefrom. As a result, machine-learning models trained using historical data do not have an acceptable online/offline NRT feature match rate when deployed online, resulting in model refits and retraining that delay usage of the machine-learning model in the online operation environment.

Accordingly, near real-time feature simulation for online/offline point-in-time data parity is described. These techniques support automated logic generation (e.g., as part of a domain-specific language) to define event processing variables as part of feature engineering of simulated NRT features. Furthermore, the domain-specific language supports unified implementation across online and offline environments. As part of this, enriched event data is generated from the online operation environment in a standardized fashion for use in training data implemented in an offline point-in-time feature simulation.

In one example, a feature engineering user interface is output at a computing device. The user interface includes functionality usable to receive an input selecting types of variables to include in an NRT feature. Logic is then generated automatically and without user intervention to identify processing parameters for use in the NRT feature simulation as well as in the online operation environment.

The enriched event data is passed from the online operation environment to an offline simulation environment. The offline simulation environment is configured to use the enriched event data to generate training data. The training data is configured to simulate execution of the digital services as part of the online operation environment. For instance, the offline simulation environment uses a latency delay model to infer an online processing time of the enriched event data, such as based on time stamps associated with the enriched event data. The time stamps associated with the enriched event data include at least a first time stamp associated with a publishing time of the event (e.g., prior to enrichment) and a second time stamp associated with generation of the enriched event data from the event. For example, the latency delay model measures a first, pre-processing delay as a difference between the second time stamp and the first time stamp and generates a simulated delay latency based at least on the first delay.

In some implementations, the time stamps further include a third time stamp associated with generation of an event outcome by the machine-learning model during execution of the online operation environment. In such scenarios, the latency delay model may further measure a second, post-persistence delay as a difference between the third time stamp and the second time stamp and may adjust the simulated delay latency based on the second delay.

During offline training, the machine-learning model receives the simulated delay latency and the enriched event data and processes the enriched event data according to the simulated delay to generate modeled outcomes. Parameters of the machine-learning model may be adjusted based on event outcomes generated via the online operating environment, when available. In this way, the machine-learning model is trained to process new NRT features defined via the feature engineering user interface using the offline simulation prior to deployment in the online operating environment. By including the simulated delay latency, a match rate between the modeled outcomes generated during the offline simulation and event outcomes generated via the online operating environment is increased, which also decreases a time-to-market for the machine-learning model by decreasing refitting and retraining. Moreover, the offline simulation does not interfere with the online operating environment, thereby preserving operational efficiency of the online operating environment. Further discussion of these and other examples is included in the following discussion and shown in corresponding figures.

In the following discussion, an example environment is first described that may employ the techniques described herein. Examples of implementation details and procedures are then described which may be performed in the exemplary environment as well as other environments. Performance of the example procedures is not limited to the example environment and the example environment is not limited to performance of the example procedures.

### Feature Engineering Simulation and Machine-Learning Model Training

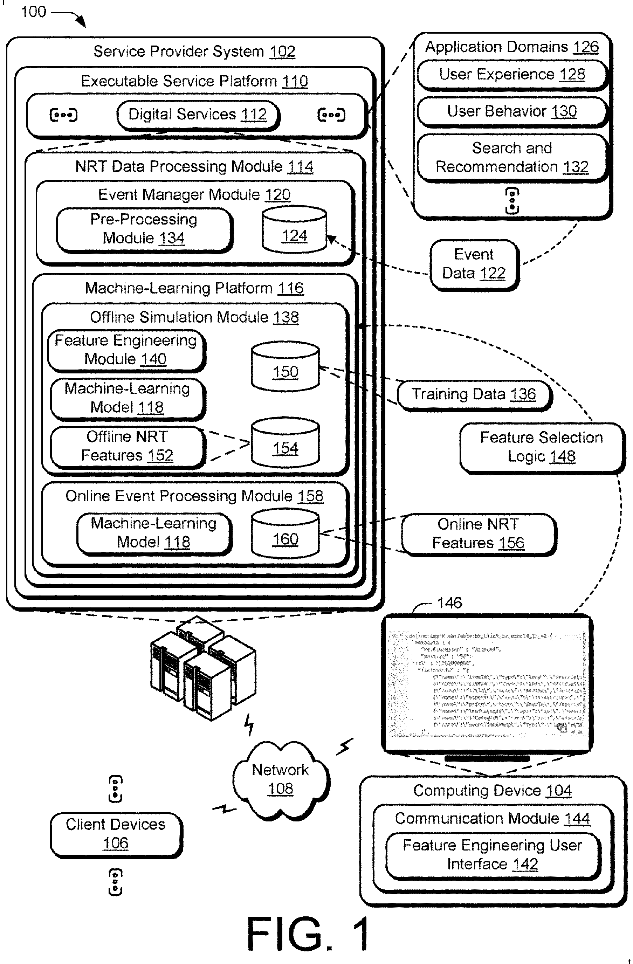

FIG. 1 is an illustration of a digital medium environment 100 in an example implementation that is operable to employ feature engineering logic generation and simulation techniques described herein. The illustrated environment 100 includes a service provider system 102, a computing device, 104, and a plurality of client devices 106 that are communicatively coupled, one to another, via a network 108. Computing devices that implement the service provider system 102, the computing device 104, and the client devices 106 are configurable in a variety of ways.

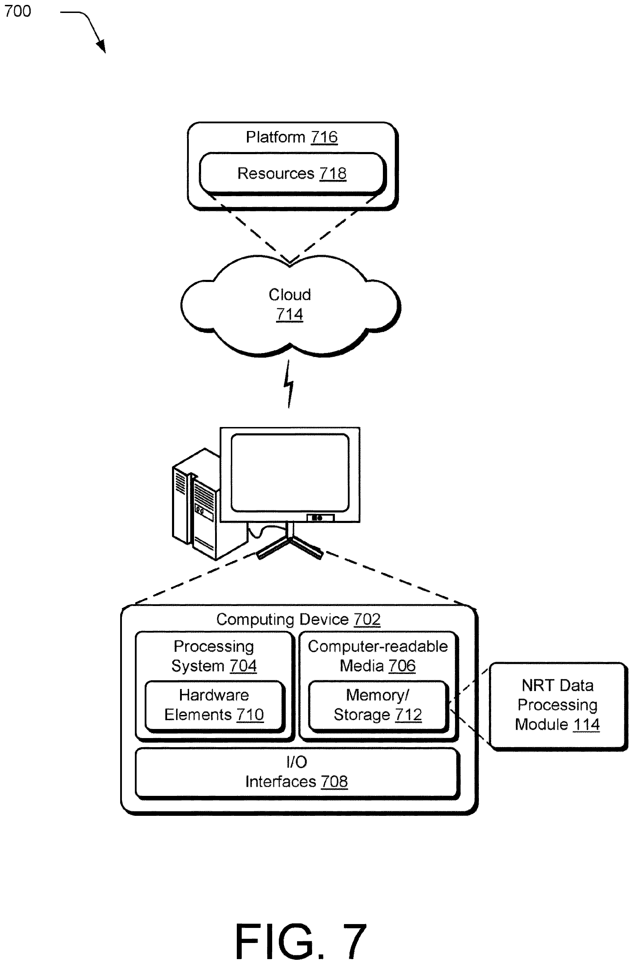

A computing device, for instance, is configurable as a desktop computer, a laptop computer, a mobile device (e.g., assuming a handheld configuration such as a tablet or mobile phone), and so forth. Thus, a computing device ranges from full resource devices with substantial memory and processor resources (e.g., personal computers, game consoles) to a low-resource device with limited memory and/or processing resources (e.g., mobile devices). Additionally, a computing device is also representative of a plurality of different devices, such as multiple servers utilized by a business to perform operations "over the cloud" as illustrated for the service provider system 102 and as described with respect to FIG. 7.

The service provider system 102 includes an executable service platform 110. The executable service platform 110 is configured to implement and manage access to digital services 112 "in the cloud" that are accessible by the client devices 106 via the network 108. Thus, the executable service platform 110 provides an underlying infrastructure to manage execution of the digital services 112, e.g., through control of underly computational resources.

The executable service platform 110 supports numerous computational and technical advantages, including an ability of the service provider system 102 to readily scale resources to address wants of an entity associated with the client devices 106. Thus, instead of incurring an expense of purchasing and maintaining proprietary computer equipment for performing specific computational tasks, cloud computing provides the client devices 106 with access to a wide range of hardware and software resources so long as the client has access to the network 108.

The digital services 112 can take a variety of forms. Examples of digital services include social media services, document management services, storage services, media streaming services, content creation services, productivity services, digital marketplace services, auction services, and so forth. In some instances, the digital services 112 are implemented at least partially by a near real-time (NRT) data processing module 114 that employs a machine-learning platform 116. The machine-learning platform 116 is representative of functionality to train, retrain, and use a machine-learning model 118 in support of implementing an operation, e.g., for a search, generating a recommendation as part of a recommendation engine, and so forth.

Execution of the digital services 112 by the executable service platform 110 includes generation, detection, and management of events. These events are usable by the machine-learning model 118 to control output of corresponding actions, e.g., to cause execution of operations based on identification of an occurrence of an event by the machine-learning model 118. As part of this, an event manager module 120 is employed by the NRT data processing module 114 to generate and manage event data 122, which are illustrated as stored in a storage device 124, e.g., a datastore. The event data 122 describe execution of the digital services 112 in this example as well as values of events that occur during this execution. The event data 122 may be generated, for instance, by one or more application domains 126, non-limiting examples of which include a user experience domain 128, a user behavior domain 130, and a search and recommendation domain 132.

In a search and recommendation example, for instance, the machine-learning model 118 is employed by the search and recommendation domain 132 to generate recommendations of items of digital content. The recommendations are configurable in a manner similar to performing a search based on a search query to locate the items of digital content. In this example, the search is implemented by the machine-learning model 118 through use of event data 122 to learn, automatically and without user intervention, patterns expressed in the data to guide generation of a search result (i.e., the recommendation) of a particular item of digital content. Use of the search result as a recommendation supports a variety of usage scenarios, including digital audio recommendations, digital video recommendations, auction items, and so forth.

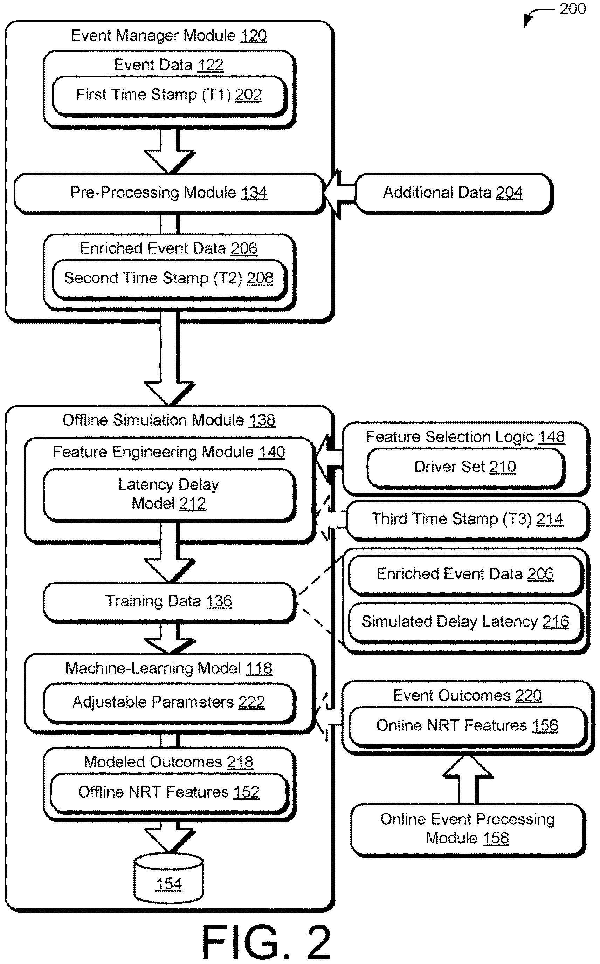

In some implementations, the event data 122 are enriched by a pre-processing module 134 prior to being input into the machine-learning model 118. As will be elaborated below with respect to FIG. 2, the pre-processing module 134 may embed additional data with a given event of the event data 122 to generate an enriched event. Because pre-processing the event data 122 with the pre-processing module 134 occurs after the event is generated, a first time stamp associated with the event data 122 is different than a second time stamp associated with the enriched event. For example, the second time stamp is after the first time stamp with respect to time. Furthermore, processing of the enriched event by the machine-learning model 118 occurs over a processing time that may be delayed due to processing of multiple concurrent events. In accordance with the techniques described herein, the NRT data processing module 114 accounts for these pre-processing and processing delays while training the machine-learning model 118 in order to improve an accuracy of the model fit.

As previously described, the machine-learning model 118 refers to a computer representation that can be tuned (e.g., trained and retrained) based on inputs to approximate unknown functions. The machine-learning model 118 is configurable to utilize algorithms to learn from, and make predictions on, known data by analyzing training data 136 to learn and relearn to generate outputs that reflect patterns and attributes of the training data 136. Examples of machine-learning models include neural networks (e.g., deep learning neural networks), convolutional neural networks (CNNs), long short-term memory (LSTM) neural networks, decision trees, and so forth.

As will be elaborated herein, such as with respect to FIG. 2, the machine-learning platform 116 generates the training data 136 via an offline simulation module 138. The offline simulation module 138 is employed to simulate operation of the executable service platform 110 offline using the event data 122 to generate the training data 136 and train the machine-learning model 118. The training data 136 is generated, for example, by a feature engineering module 140 that is configured to extract events as "features" that are usable to improve efficiency and accuracy in the training, retraining, and use of the machine-learning model 118.

Furthermore, the offline simulation module 138 simulates event processing delays in the training data 136. As mentioned above, model inaccuracies arise in machine-learning models that process time-series data to make predictions in real-time when features are added to the training data that occur after a given model output (e.g., a prediction) would have occurred in a real-word production scenario. These point-in-time correctness issues may occur due to online processing delay latencies that are not reflected in an offline training scenario using training data that merely replays an event history. Different types of events, for instance, may have different pre-processing and processing times, and so incorporating simulated delay latencies in the training data 136 used to train the machine-learning model 118 for a given NRT feature improves an offline/online match rate.

The feature engineering module 140 is configured to generate a feature engineering user interface 142, which is illustrated as accessed by the computing device 104 via the network 108 using a communication module 144, e.g., a browser, a network-enabled application, and so forth. The feature engineering user interface 142, as displayed by a display device 146, is configured to receive inputs to specify features for processing by the machine-learning platform 116.

These inputs are then usable as part of feature engineering to support automated generation of feature selection logic 148 (e.g., as part of a domain specific language) by the feature engineering module 140, automatically and without user intervention. The feature selection logic 148 is configurable to define NRT variables, as further described in relation to FIG 2. Use of the feature selection logic 148, as part of feature engineering, also supports unified implementation across online and offline environments, as further described below.

The feature selection logic 148 is used by the feature engineering module 140 to generate the training data 136 for specified NRT features, and the training data 136 is stored in a training data storage device 150. Once generated, the training data 136 is used for training the machine-learning model 118 to update offline NRT features 152, which are stored in an offline feature storage device 154. In at least one implementation, the offline feature storage device 154 is a key-value data store, where variable values of the offline NRT features 152 are associated with a key (e.g., an identifier, such as a user ID). The offline NRT features 152 are simulated features that approximate online NRT features 156, as defined by the feature selection logic 148. By simulating the offline NRT features 152, the machine-learning model 118 may be trained on new NRT features without waiting for the event data 122 regarding those features to mature.

The online NRT features 156 are updated by the machine-learning model 118 via an online event processing module 158. The online NRT features 156 are stored in an online feature storage device 160. Similar to the offline feature storage device 154, in at least one implementation, the online feature storage device 160 is a key-value data store for efficient variable storage and retrieval.

Unlike the offline simulation module 138 that processes historical event data 122 (e.g., events that occurred during a previous point-in-time window), the online event processing module 158 processes current event data 122, e.g., in real-time or near real-time. For example, the online event processing module 158 is implemented to support operation of the digital services 112 in real-time for access by the client devices 106. In the illustrated example, the machine-learning model 118 is configured to support implementations of the digital services 112, e.g., for search and recommendation generation as part of a recommendation engine, and so forth. As previously described, examples of the digital services 112 include social media services, document management services, storage services, media streaming services, content creation services, productivity services, digital marketplace services, auction services, and so forth. Accordingly, computational efficiency is a primary consideration in provisioning of computational resources in support of these services as part of the online event processing module 158.

However, data scientists may desire new NRT features as part of feature engineering in support of operation of the digital services 112, which can have an adverse effect on performance. To address this challenge, in this example, the training of the machine-learning model 118 to evaluate new NRT features is supported through use of the offline simulation module 138 using event data 122 having parity with data as used as part of implementing the digital services 112. As will be elaborated herein (e.g., with respect to FIG. 2), the offline NRT features 152 are generated using simulated delay latencies via the offline simulation module 138 to achieve point-in-time data parity between the offline feature storage device 154 and the online feature storage device 160.

In general, functionality, features, and concepts described in relation to the examples above and below are employed in the context of the example procedures described in this section. Further, functionality, features, and concepts described in relation to different figures and examples in this document are interchangeable among one another and are not limited to implementation in the context of a particular figure or procedure. Moreover, blocks associated with different representative procedures and corresponding figures herein are applicable together and/or combinable in different ways. Thus, individual functionality, features, and concepts described in relation to different example environments, devices, components, figures, and procedures herein are usable in any suitable combinations and are not limited to the particular combinations represented by the enumerated examples in this description.

FIG. 2 depicts an example implementation 200 showing operation of the event manager module 120 and the offline simulation module 138 of FIG. 1 in greater detail. The following discussion describes techniques that are implementable utilizing the previously described systems and devices. Aspects of each of the procedures are implemented in hardware, firmware, software, or a combination thereof. The procedures are shown as a set of blocks that specify operations performed by one or more devices and are not necessarily limited to the orders shown for performing the operations by the respective blocks.

The event manager module 120 assigns a first time stamp 202 (e.g., T1) to the event data 122. The first time stamp 202 corresponds to a publishing time of a given event of the event data 122. For example, the event data 122 are collected as a series of events over time. The pre-processing module 134 receives the event data 122 along with additional data 204 to generate enriched event data 206. By way of example, the pre-processing module 134 retrieves the additional data 204 from one or more databases associated with the application domains 126 of FIG. 1. The additional data 204 may include, for instance, user information, event context information, and the like, e.g., to specify "userId," "itemId," "siteId," "title," "price," and so forth.

A second time stamp 208 (e.g., T2) is assigned to the enriched event data 206 by the pre-processing module 134. The second time stamp 208 occurs later in time than the first time stamp 202 because enriching the event data 122 occurs over a duration that is referred to herein as a variable state pre-persistence time or a pre-processing delay. The pre-processing delay is a difference between the second time stamp 208 and the first time stamp 202.

The enriched event data 206, along with the first time stamp 202, the second time stamp 208, and/or the pre-processing delay associated with a given event, are received by the offline simulation module 138, including the feature engineering module 140. The feature engineering module 140 is configured to extract events of the enriched event data 206 according to the feature selection logic 148 defined (e.g., by a user, such as a data scientist or engineer) via the feature engineering user interface 142 shown in FIG. 1. The feature selection logic 148 includes a driver set 210 that includes one or more data files and/or data tables that define an NRT feature that the user has selected to simulate in the training data 136. The driver set 210 includes, for example, a variable name, a point-in-time window to evaluate, a type of variable (e.g., SlidingWindow, LastK, TimeDecay, EventSeq), a key dimension (e.g., user identification, user email, user address, user device, session identification), a creator of the variable, and/or a variable creation time, just to name a few.

The enriched event data 206, including the associated first time stamp 202 and second time stamp 208, and the feature selection logic 148, including driver set 210, are received by the feature engineering module 140 and used by the feature engineering module 140 to generate the training data 136. In the example implementation 200 shown in FIG. 2, the feature engineering module 140 includes a latency delay model 212. In at least one implementation, the latency delay model 212 is a machine-learning model that is trained to recognize processing latency delay patterns in the historical enriched event data order to make predictions regarding latency delays associated with processing the enriched event data 206 with respect to the simulated NRT feature.

Optionally, the latency delay model 212 receives a third time stamp 214 that corresponds to a time at which a given event of the enriched event data 206 is consumed in a roll-up computation to update a state of the NRT feature in an online production environment, such as via processing via the online event processing module 158. For example, processing of the enriched event data 206 includes loading a stored variable based on a key specified by the feature selection logic 148 (e.g., "Key: currentRecord.userid") and computing an updated feature state, and this process occurs over a duration that is referred to herein as a post-persistence time or a post-persistence delay. The post-persistence delay is a difference between third time stamp 214 and the second time stamp 208. When the NRT feature defined by the feature selection logic 148 has already been used in online production, the third time stamp 214 may be received by the latency delay model 212. However, when the NRT feature defined by the feature selection logic 148 is a new feature, the third time stamp 214 may be simulated via the latency delay model 212 based on the first time stamp 202 and the second time stamp 208. For example, the latency delay model 212 may use inference or another type of logic to estimate the third time stamp 214 based on the first time stamp 202 and the second time stamp 208.

The latency delay model 212, for example, is configured to generate a simulated delay latency 216, which is included in the training data 136 along with the enriched event data 206. In at least one example, the simulated delay latency 216 is determined from the pre-processing delay and the post-persistence delay for a plurality of enriched events of the enriched event data 206. For example, the determination is based on at least a first probabilistic expectation level and a second probabilistic expectation level of the measured pre-processing delay (e.g., a first measured delay latency) and the post-persistence delay (e.g., a second delay latency), which may be measured or simulated, as described above. As an example, the first probabilistic expectation level is a 95^{th} percentile rank (P95), and the second probabilistic expectation level is a 99^{th} percentile rank (P99). In some implementations, the simulated delay latency 216 is a global constant delay for a set of enriched events and a set of NRT variables. For example, the global constant delay is a time value in a range from 1-3 seconds, such as 2 seconds. Alternatively, the simulated delay latency 216 is a constant delay that is specific to a type of enriched event and/or a type of NRT variable. Additionally or alternatively, the simulated delay latency 216 is an adaptive delay that is updated based on measured latency delays from online processing.

The training data 136, including the enriched event data 206 and the simulated delay latency 216, are input into the machine-learning model 118 so that the enriched event data 206 are processed on a time scale that is adjusted by the simulated delay latency 216. By doing so, a point-in-time simulation is provided that has increased accuracy with respect to online event processing. The machine-learning model 118 outputs modeled outcomes 218, which include, or are associated with, the offline NRT features 152. The modeled outcomes 218 are stored in the offline feature storage device 154, which may be used to backfill values to the online feature storage device 160 for new NRT features that are yet to undergo online processing so that the new NRT features may be processed via the online event processing module 158.

Optionally, the machine-learning model 118 receives event outcomes 220 generated by the online event processing module 158, such as when the feature selection logic 148 specifies NRT features that are already processed via the online event processing module 158. As such, the event outcomes 220 include, or are associated with, the online NRT features 156. The event outcomes 220 may provide feedback to the machine-learning model 118 for generating adjustments to adjustable parameters 222 of the machine-learning model 118 based on a comparison of the modeled outcomes 218 and the event outcomes 220.

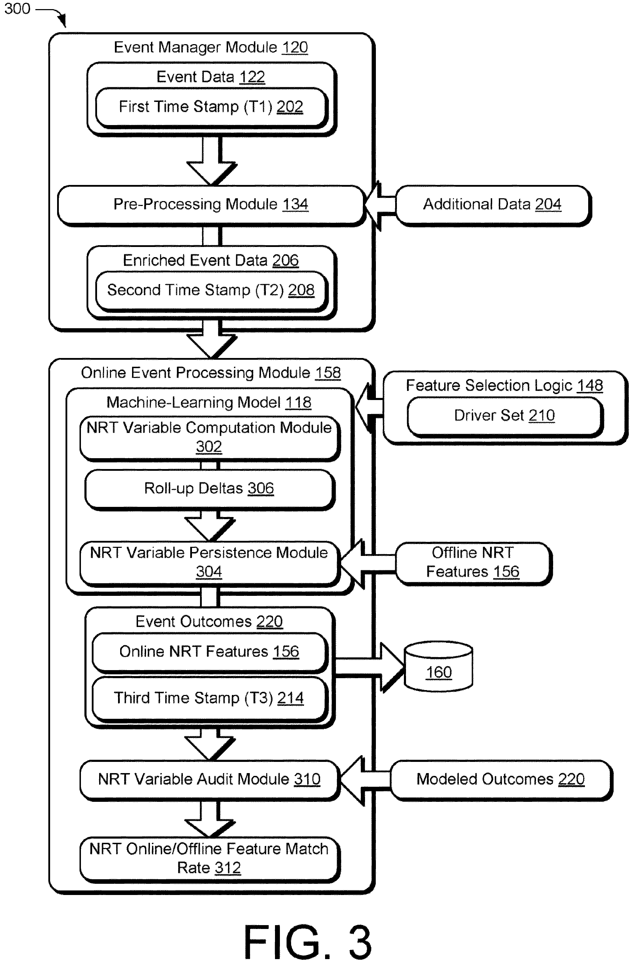

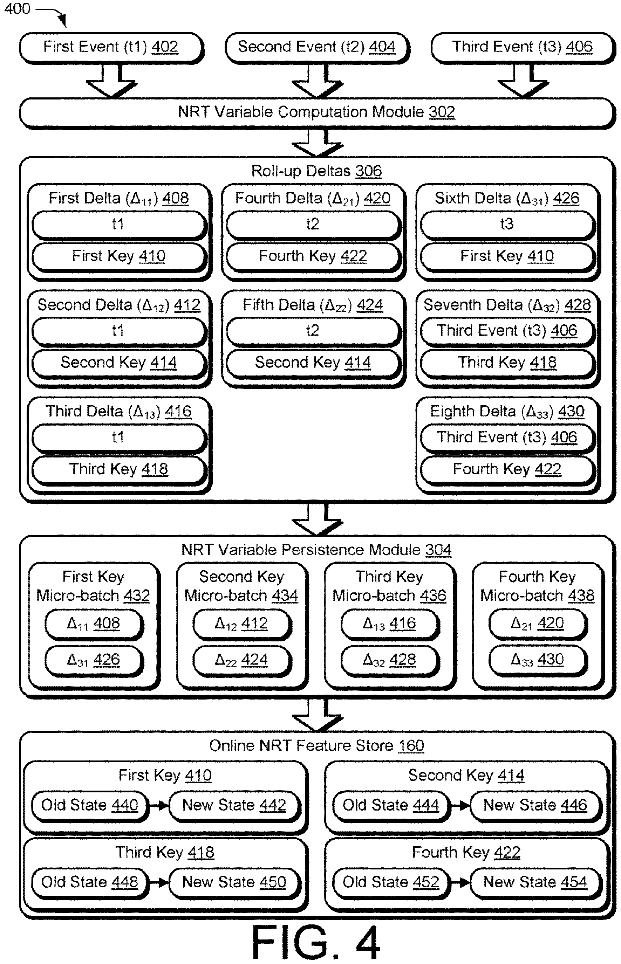

FIG. 3 depicts an example implementation 300 showing operation of the event manager module 120 and the online event processing module 158 of FIG. 1 in greater detail. FIG. 4 depicts an example implementation 400 of a roll-up computation performed by the machine-learning model 118 to generate the event outcomes 220. The following discussion describes techniques that are implementable utilizing the previously described systems and devices. Aspects of each of the procedures are implemented in hardware, firmware, software, or a combination thereof. The procedures are shown as a set of blocks that specify operations performed by one or more devices and are not necessarily limited to the orders shown for performing the operations by the respective blocks. In portions of the following discussion, reference is made in parallel to FIGS. 3 and 4.

With reference to FIG. 3, the event manager module 120 processes the event data 122 via the pre-processing module 134 to generate the enriched event data 206, as previously described with respect to FIG. 2. The enriched event data 206 is received by the online event processing module 158 along with the feature selection logic 148, as also described above with respect to FIG. 2. The enriched event data 206 are input into the machine-learning model 118, which has already been trained via the offline simulation module 138 to process the NRT feature specified by the feature selection logic 148 according to the driver set 210.

In the implementation 300 shown in FIG. 3, the machine-learning model 118 includes an NRT variable computation module 302 and an NRT variable persistence module 304. The NRT variable computation module 302, for instance, determines differences (e.g., deltas) between sequential data in the enriched event data 206 to generate roll-up deltas 306, which are input into the NRT variable persistence module 304. The NRT variable persistence module 304 aggregates the roll-up deltas 306 in micro-batches to determine updated states of the online NRT features 156, which are output as the event outcomes 220. The event outcomes 220 may further include the third time stamp 214, as measured based on a time the event outcome is generated from a given event of the enriched event data 206.

With reference to FIG. 4, a series of three example enriched events (e.g., from the enriched event data 206) are depicted as a first event 402, a second event 404, and a third event 406. The first event 402, the second event 404, and the third event 406 include respective time stamps and data associated with a plurality of keys (e.g., a plurality of different identifiers). For example, the first event 402 is associated with a time stamp t1, the second event 404 is associated with a time stamp t2, and the third event 406 is associated with a time stamp t3. The time stamp t1, the time stamp t2, and the time stamp t3 may correspond to the second time stamp 208 associated with the enriched event data 206, for example, and because the first event 402, the second event 404, and the third event 406 are published at different times, the second time stamp 208 may be different for the various events.

The NRT variable computation module 302 performs a stateless roll-up computation to generate the roll-up deltas 306 based on differences between sequential data in the first event 402, the second event 404, and the third event 406, using for example, delta encoding. A given roll-up delta 306 includes a time stamp and a key. In the example implementation 400 of FIG. 4, the roll-up deltas 306 include a first delta 408 (e.g., Δ₁₁), a second delta 412 (e.g., Δ₁₂), a third delta 416 (e.g., Δ₁₃), a fourth delta 420 (e.g., Δ₂₁), a fifth delta 424 (e.g., Δ₂₂), a sixth delta 426 (e.g., Δ₃₁), a seventh delta 428 (e.g., Δ₃₂), and an eighth delta 430 (e.g., Δ₃₃). The first delta 408 is associated with the time stamp t1 of the first event 402 and a first key 410, the second delta 412 is associated with the time stamp t1 of the first event 402 and a second key 414, and the third delta 416 is associated with the time stamp t1 of the first event 402 and a third key 418. The fourth delta 420 is associated with the time stamp t2 of the second event 404 and a fourth key 422, and the fifth delta 424 is associated with the time stamp t2 of the second event 404 and the second key 414. The sixth delta 426 is associated with the time stamp t3 of the third event 406 and the first key 410. The seventh delta 428 associated with the time stamp t3 of the third event 406 and the third key 418, and the eighth delta 430 is associated with the time stamp t3 of the third event 406 and the fourth key 422.

In the example implementation 400, the NRT variable persistence module 304 receives the roll-up deltas 306 and organizes the deltas according to the key associated with the given roll-up delta 306 for aggregated storage write operations. The NRT variable persistence module 304 generates a first key micro-batch 432, a second key micro-batch 434, a third key micro-batch 436, and a fourth key micro-batch 438. The first key micro-batch 432 includes the first delta 408 and the sixth delta 426 because the first delta 408 and the sixth delta 426 include the first key 410. The second key micro-batch 434 includes the second delta 412 and the fifth delta 424 because the second delta 412 and the fifth delta 424 include the second key 414. The third key micro-batch 436 includes the third delta 416 and the seventh delta 428 because the third delta 416 and the seventh delta 428 include the third key 418. The fourth key micro-batch 438 includes the fourth delta 420 and the eighth delta 430 because the fourth delta 420 and the eighth delta 430 include the fourth key 422. Organizing the roll-up deltas 306 into micro-batches for delta aggregation rather than triggering storage write operations for individual roll-up deltas 306 decreases a load on processing resources of the service provider system 102 and storage usage of the online feature storage device 160. Furthermore, aggregating the roll-up deltas 306 in micro-batches increases a computational efficiency of the NRT variable persistence module 304.

After organizing the roll-up deltas 306 into the micro-batches, the NRT variable persistence module 304 aggregates the deltas in a given micro-batch in a roll-up operation using one or more suitable aggregation functions to update an old state of the corresponding NRT feature, as stored in the online feature storage device 160, to a new state. Examples of such aggregation functions include, but are not limited to, minima calculations, maxima calculations, count numbers, summing functions (e.g., weighted or unweighted sums), averaging functions, standard deviation functions, decay functions, and statistical functions, e.g., estimated quantiles and/or histograms. Moreover, processing the roll-up deltas 306 in the micro-batches enables out-of-order event and delta processing and enables backfill from the online NRT features 156, as indicated in FIG. 3.

For a given key, the aggregated deltas within the corresponding micro-batch are applied to an existing state of the corresponding NRT feature, as retrieved from the online feature storage device 160, to generate a new state of the NRT feature for storage in the online feature storage device 160. In the present example, the NRT variable persistence module 304 retrieves an old state 440 of the NRT variable associated with the first key 410 from the online feature storage device 160. The aggregated deltas are then applied from the first key micro-batch 432 to the old state 440 to generate a new state 442 of the NRT variable with respect to the first key 410. Similarly, the NRT variable persistence module 304 retrieves an old state 444 of the NRT variable associated with the second key 414 and applies the aggregated deltas from the second key micro-batch 434 to the old state 444 to generate a new state 446 of the NRT variable with respect to the second key 414. Similar operations are performed for the third key 418 and the fourth key 422, respectively, to update an old state 448 associated with the third key 418 to a new state 450 and to update an old state 452 associated with the fourth key 422 to a new state 454.

Referring to the implementation 300 of FIG. 3, the event outcomes 220, including the new states of respective features, are input into an NRT variable audit module 310 in addition to being stored in the online feature storage device 160. The NRT variable audit module 310 is configured to determine a level of matching of an output of the online operational environment with a corresponding an output of the simulation. By way of example, the NRT variable audit module 310 compares an event outcome 220 output generated by the machine-learning model 118 during execution in the online event processing module 158 with a corresponding modeled outcome 220 generated by the machine-learning model 118 during execution in the offline simulation module 138 to generate an NRT online/offline feature match rate 312. The NRT online/offline feature match rate 312 is usable to determine accuracy of the event data 122 as well as accuracy in the simulation by the machine-learning model 118. This determination, for instance, is usable to automatically cease operation of the machine-learning model 118 for evaluating a particular NRT feature upon detection that the level of matching has decreased below a threshold and thus is no longer accurate, suggesting that the machine-learning model 118 may benefit from retraining, for example.

### Example Procedures

This section describes examples of procedures for near real-time feature simulation for online/offline point-in-time data parity. Aspects of the procedures may be implemented in hardware, firmware, or software, or a combination thereof. The procedures are shown as a set of blocks that specify operations performed by one or more devices and are not necessarily limited to the orders shown for performing the operations by the respective blocks.

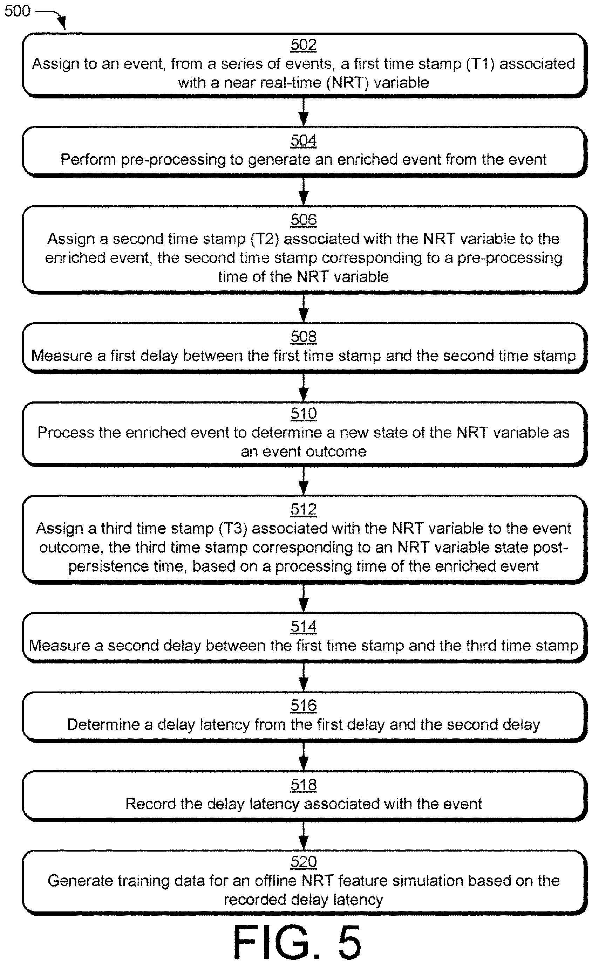

FIG. 5 depicts a procedure 500 in an example of implementing digital services by executing online event processing of a near real-time (NRT) variable and generating training data. A first time stamp (T1) associated with the NRT variable is assigned to an event from a series of events (block 502). By way of example, the first time stamp 202 corresponds to a publishing time of the event, e.g., from the one or more application domains 126. The event, for instance, describes interaction with and execution of the digital services 112, such as user selections (e.g., "click_by_user") or other user input. The event may be stored as the event data 122 in the storage device 124.

Pre-processing is performed to generate an enriched event from the event (block 504). By way of example, the pre-processing module 134 executes instructions to retrieve the additional data 204 related to the event that provide a context to occurrence of the event, e.g., to specify "itemId," "siteId," "title," "price," "eventTimeStamp," and so forth to generate enriched event data 206 from the event data 122.

A second time stamp (T2) associated with the NRT variable is assigned to the enriched event, the second time stamp corresponding to a pre-processing time of the NRT variable (block 506). By way of example, the second time stamp 208 is applied to the enriched event data 206 by the pre-processing module 134 in order to specify at time at which the enriched event is generated. As such, the second time stamp 208 is later in time than the first time stamp 202.

A first delay between the first time stamp and the second time stamp is measured (block 508). By way of example, the first delay corresponds to a difference between the second time stamp 208 and the first time stamp 202 (e.g., T2-T1) and corresponds to a pre-processing delay. The pre-processing delay may be defined as an amount of time it takes the pre-processing module 134 to retrieve the additional data 204 and associate the additional data 204 with the event to generate the enriched event.

The enriched event is processed to determine a new state of the NRT variable as an event outcome (block 510). By way of example, the machine-learning model 118, when executed by the online event processing module 158, receives the enriched event data 206 and fetches a stored value associated with the NRT variable from the online feature storage device 160, such as by using a key associated with the enriched event data 206. The machine-learning model 118 computes the roll-up deltas 306 based on differences between sequential data. The machine-learning model 118, for example, further aggregates the roll-up deltas 306 into micro-batches to determine the new state of the NRT variable. The machine-learning model 118 updates the corresponding online NRT feature 156 to the new state in the online feature storage device 160. The new state of the NRT variable is the event outcome 220 output by the machine-learning model 118, for example.

A third time stamp (T3) associated with the NRT variable is assigned to the event outcome, the third time stamp corresponding to an NRT variable state post-persistence time, based on a processing time of the enriched event (block 512). By way of example, the machine-learning model 118 assigns the third time stamp 214 to the event outcome 220 to indicate a time at which the event outcome 220 is output by the machine-learning model 118. The third time stamp 214 is later in time than the second time stamp 208.

A second delay between the first time stamp and the third time stamp is measured (block 514). By way of example, the second delay corresponds to a difference between the third time stamp 214 and the second time stamp 208 (e.g., T3-T2) and corresponds to a processing delay. The processing delay may be defined as an amount of time it takes the machine-learning model 118 to retrieve the old, stored value of the NRT variable and perform the roll-up and persistence computations to generate the new state of the NRT variable.

A delay latency is determined from the first delay and the second delay (block 516). By way of example, the delay latency is a sum of the first delay and the second delay. Alternatively, the delay latency is measured from a difference between the third time stamp 214 and the first time stamp 202 (e.g., T3-T1) and corresponds to a total amount of time it takes to process the event to generate the event outcome.

The delay latency associated with the event is recorded (block 518). By way of example, the delay latency may be recorded in the storage device 124 or another datastore. Recording the delay latency enables simulated delay latencies for similar NRT features to be generated, e.g., via the offline simulation module 138, as will be elaborated below.

Training data is generated for an offline NRT feature simulation based on the recorded delay latency (block 520). By way of example, the latency delay model 212 of the offline simulation module 138 uses the recorded delay latency to generate a simulated delay latency 216 to include in the training data 136. The training data 136 may be used to train the machine-learning model 118 to process a new NRT variable in an offline simulation before deploying the new NRT variable in the online event processing module 158. By including the simulated delay latency 216 in the training data 136, the real-world time delays associated with pre-processing and processing an event are accounted for, resulting in increased accuracy of the machine-learning model 118.

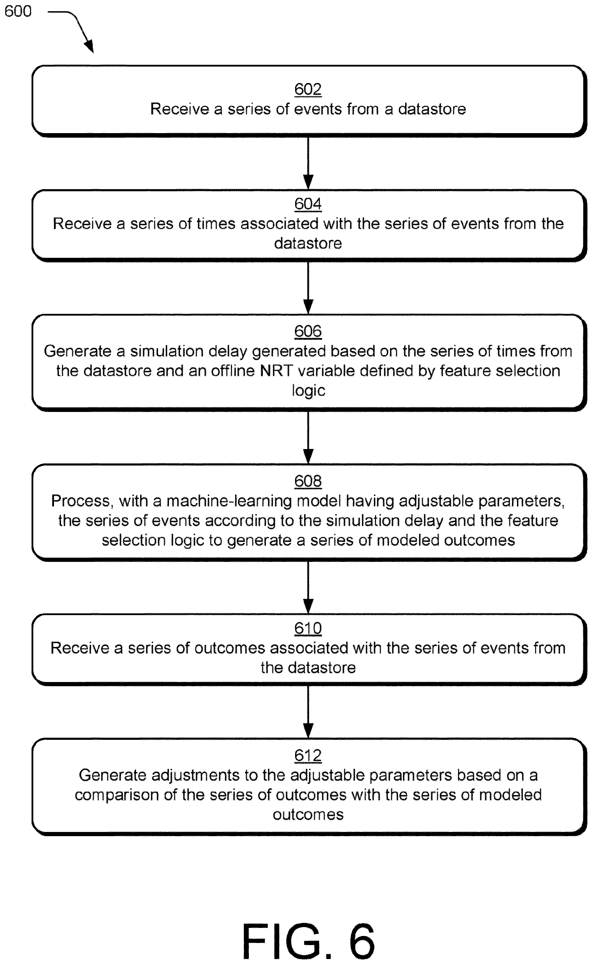

FIG. 6 depicts a procedure 600 in an example implementation of simulating an offline NRT variable and training a machine-learning model. A series of events is received from a datastore (block 602). By way of example, the series of events is received by the feature engineering module 140 of the offline simulation module 138. The series of events, for instance, corresponds to the enriched event data 206 and includes historical time-series event data. In at least one implementation, the historical time-series event data has been processed with respect to an online NRT variable that is different than the offline NRT variable that is to be simulated.

A series of times associated with the series of events from the datastore is received (block 604). The series of times associated with the series of events include one or more of the first time stamp 202, the second time stamp 208, and the third time stamp 214. By way of example, a given event includes a corresponding first time stamp 202 at which the event was published, a corresponding second time stamp 208 at which the event was enriched, and a corresponding third time stamp 214 at which the machine-learning model 118 output an event outcome associated with the online NRT variable, as specified by the historical time-series event data.

A simulation delay is generated based on the series of times received from the datastore and an offline NRT variable defined by feature selection logic (block 606). By way of example, the latency delay model 212 is configured to evaluate differences between the third time stamp 214 and the first time stamp 202 for a given event, type of event, and/or type of NRT variable, and the latency delay model 212 is further configured to output the simulated delay latency 216 as the simulation delay. The simulated delay latency 216 is one of a global constant delay for a plurality of types of enriched events for a plurality of types of NRT variables, a constant delay that is specific to a type of enriched event, a constant delay that is specific to a type of enriched event and a type of NRT variable, and an adaptive delay. For instance, the latency delay model 212 generates the simulated delay latency 216 as a probabilistic expectation level (e.g., a 95^{th} or 99^{th} percentile rank) based on measured delay latencies associated with the historical time-series event data. When the global constant delay is not used, the latency delay model 212 adjusts the simulated delay latency 216 based on measured delay latencies for similar events and/or types of NRT variables, as defined by the feature selection logic 148.

The series of events is processed with a machine-learning model having adjustable parameters according to the simulation delay and the feature selection logic to generate a series of modeled outcomes (block 608). As mentioned above, the feature selection logic 148 defines the offline NRT variable that is to be simulated. The feature selection logic 148 is generated based on user input is and communicated to the offline simulation module 138 in a domain-specific language. The machine-learning model 118 receives the training data 136, which includes the enriched event data 206 and the simulated delay latency 216, and processes the enriched event data 206 in accordance with the simulated delay latency 216 to generate the modeled outcomes 218. The modeled outcomes 218, for instance, include values for the offline NRT variable defined by the feature selection logic 148.

A series of outcomes associated with the series of events is received from the datastore (block 610). By way of example, the event outcomes 220 are received by the offline simulation module 138 from the online feature storage device 160 and correspond to real-life event outcomes associated with online NRT features 156, as generated via the online event processing module 158.

Adjustments to the adjustable parameters are generated based on a comparison of the series of outcomes with the series of modeled outcomes (block 612). By way of example, the machine-learning model 118 is retrained and/or refit until the modeled outcomes 218 for a given data set substantially match the event outcomes 220, such as when a match rate is greater than or equal to an acceptable threshold. However, by including the simulated delay latency 216, an amount of retraining may be decreased, thus resulting in faster online deployment of the machine-learning model 118 for processing the simulated NRT variable.

### Example System and Device

FIG. 7 illustrates an example of a system generally at 700 that includes an example of a computing device 702 that is representative of one or more computing systems and/or devices that may implement the various techniques described herein. This is illustrated through inclusion of the NRT data processing module 114. The computing device 702 may be, for example, a server of a service provider, a device associated with a client (e.g., a client device), an on-chip system, and/or any other suitable computing device or computing system.

The example computing device 702 as illustrated includes a processing system 704, one or more computer-readable media 706, and one or more I/O interfaces 708 that are communicatively coupled, one to another. Although not shown, the computing device 702 may further include a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 704 is representative of functionality to perform one or more operations using hardware. Accordingly, the processing system 704 is illustrated as including hardware elements 710 that may be configured as processors, functional blocks, and so forth. This may include implementation in hardware as an application specific integrated circuit or other logic device formed using one or more semiconductors. The hardware elements 710 are not limited by the materials from which they are formed or the processing mechanisms employed therein. For example, processors may be comprised of semiconductor(s) and/or transistors (e.g., electronic integrated circuits (ICs)). In such a context, processor-executable instructions may be electronically executable instructions.

The computer-readable media 706 is illustrated as including memory/storage 712. The memory/storage 712 represents memory/storage capacity associated with one or more computer-readable media. The memory/storage 712 may include volatile media (such as random access memory (RAM)) and/or nonvolatile media (such as read only memory (ROM), Flash memory, optical disks, magnetic disks, and so forth). The memory/storage 712 may include fixed media (e.g., RAM, ROM, a fixed hard drive, and so on) as well as removable media (e.g., Flash memory, a removable hard drive, an optical disc, and so forth). The computer-readable media 706 may be configured in a variety of other ways as further described below.

Input/output interface(s) 708 are representative of functionality to allow a user to enter commands and information to computing device 702, and also allow information to be presented to the user and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., which may employ visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 702 may be configured in a variety of ways as further described below to support user interaction.

Various techniques may be described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques may be implemented on a variety of commercial computing platforms having a variety of processors.

An implementation of the described modules and techniques may be stored on or transmitted across some form of computer-readable media. The computer-readable media may include a variety of media that may be accessed by the computing device 702. By way of example, and not limitation, computer-readable media may include "computer-readable storage media" and "computer-readable signal media."

"Computer-readable storage media" may refer to media and/or devices that enable persistent and/or non-transitory storage of information in contrast to mere signal transmission, carrier waves, or signals per se. Thus, computer-readable storage media refers to non-signal bearing media. The computer-readable storage media includes hardware such as volatile and non-volatile, removable and non-removable media and/or storage devices implemented in a method or technology suitable for storage of information thereon, such as computer readable instructions, data structures, program modules, logic elements/circuits, or other data. Examples of computer-readable storage media may include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which may be accessed by a computer.

"Computer-readable signal media" may refer to a signal-bearing medium that is configured to transmit instructions to the hardware of the computing device 702, such as via a network. Signal media typically may embody computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 710 and computer-readable media 706 are representative of modules, programmable device logic and/or fixed device logic implemented in a hardware form that may be employed in some embodiments to implement at least some aspects of the techniques described herein, such as to perform one or more instructions. Hardware may include components of an integrated circuit or on-chip system, an application-specific integrated circuit (ASIC), a field-programmable gate array (FPGA), a complex programmable logic device (CPLD), and other implementations in silicon or other hardware. In this context, hardware may operate as a processing device that performs program tasks defined by instructions and/or logic embodied by the hardware as well as a hardware utilized to store instructions for execution, e.g., the computer-readable storage media described previously.

Combinations of the foregoing may also be employed to implement various techniques described herein. Accordingly, software, hardware, or executable modules may be implemented as one or more instructions and/or logic embodied on some form of computer-readable storage media and/or by one or more hardware elements 710. The computing device 702 may be configured to implement particular instructions and/or functions corresponding to the software and/or hardware modules. Accordingly, implementation of a module that is executable by the computing device 702 as software may be achieved at least partially in hardware, e.g., through use of computer-readable storage media and/or hardware elements 710 of the processing system 704. The instructions and/or functions may be executable/operable by one or more articles of manufacture (for example, one or more computing devices 702 and/or processing systems 704) to implement techniques, modules, and examples described herein.

The techniques described herein may be supported by various configurations of the computing device 702 and are not limited to the specific examples of the techniques described herein. This functionality may also be implemented all or in part through use of a distributed system, such as over a "cloud" 714 via a platform 716 as described below.

The cloud 714 includes and/or is representative of a platform 716 for resources 718. The platform 716 abstracts underlying functionality of hardware (e.g., servers) and software resources of the cloud 714. The resources 718 may include applications and/or data that can be utilized while computer processing is executed on servers that are remote from the computing device 702. Resources 718 can also include services provided over the Internet and/or through a subscriber network, such as a cellular or Wi-Fi network.

The platform 716 may abstract resources and functions to connect the computing device 702 with other computing devices. The platform 716 may also serve to abstract scaling of resources to provide a corresponding level of scale to encountered demand for the resources 718 that are implemented via the platform 716. Accordingly, in an interconnected device embodiment, implementation of functionality described herein may be distributed throughout the system 700. For example, the functionality may be implemented in part on the computing device 702 as well as via the platform 716 that abstracts the functionality of the cloud 714.

### Conclusion

Although the systems and techniques have been described in language specific to structural features and/or methodological acts, it is to be understood that the systems and techniques defined in the appended claims are not necessarily limited to the specific features or acts described. Rather, the specific features and acts are disclosed as example forms of implementing the claimed subject matter.

## Claims

1. A method of generating training data for a machine learning model from a series of events, comprising:
assigning, to respective events from the series of events, a series of time stamps associated with a near real-time (NRT) variable;
simulating a delay latency associated with processing the respective events via an online processing environment based on the series of time stamps; and
providing the series of events and the simulated delay latency to a machine-learning model configured to model an outcome of the series of events using the simulated delay latency.

2. The method of claim 1, wherein assigning, to the respective events from the series of events, the series of time stamps associated with the NRT variable includes:
assigning, to the respective events, a first time stamp of the series of time stamps, the first time stamp associated with a publishing time of the respective events; and
assigning, to the respective events, a second time stamp of the series of time stamps, the second time stamp associated with generating an enriched event from the respective events.

3. The method of claim 2, wherein generating the enriched event from the respective events includes adding, by a pre-processing module, additional data associated with the respective events to the respective events, the additional data including at least one of user information and event context information.

4. The method of claim 2 or 3, further comprising receiving a feature selection logic defining the NRT variable, and wherein the simulating the delay latency associated with processing the respective events via the online processing environment based on the series of time stamps includes:
measuring a first delay associated with generating the enriched event based on the first time stamp and the second time stamp; and
inferring, via a latency delay model, the simulated delay latency associated with processing the enriched event via the online processing environment based at least on the first delay and the feature selection logic.

5. The method of claim 4, wherein assigning, to the respective events from the series of events, the series of time stamps associated with the NRT variable further includes assigning, to the respective events, a third time stamp associated with generating an outcome via the online processing environment, and wherein the simulated delay latency is further based on the third time stamp.

6. The method of any one of the preceding claims, further comprising associating an outcome with the respective events of the series of events, and wherein the outcome is further provided to the machine-learning model;
wherein to model the outcome of the series of events using the simulated delay latency, the machine-learning model may be configured as an offline point-in-time feature simulation.

7. A method of training a machine learning model for a series of events, comprising:
receiving, from a datastore, a series of events;
receiving, from the datastore, a series of times associated with the series of events;
receiving, from the datastore, a simulation delay generated based on the series of events and the series of times;
receiving, from the datastore, a series of outcomes associated with the series of events;
processing, with a machine-learning model of an offline simulation module, the series of events with the simulation delay to generate a series of modeled outcomes; and
generating adjustments to adjustable parameters of the machine-learning model based on a comparison of the series of outcomes with the series of modeled outcomes.

8. The method of claim 8, wherein the simulation delay is further generated based on feature selection logic received via a feature engineering user interface in electronic communication with the offline simulation module.

9. The method of claim 9, wherein the feature selection logic is configured as a domain-specific language, and/or the feature selection logic defines a near real-time feature to simulate in the series of modeled outcomes.

10. The method of any one of claims 7 to 9, wherein the series of times associated with the series of events include, for a given event of the series of events, a first time associated with a publishing time of the given event and a second time stamp associated with generating, via a pre-processing module, an enriched event from the given event;
wherein the series of times associated with the series of events may further include a third time stamp associated with generating an outcome of the series of outcomes for the given event via online processing of the series of events.

11. A computing system, comprising:
one or more processors; and
a computer-readable storage medium storing that, responsive to execution by the one or more processors, causes the one or more processors to perform operations including:
during an online production process, for each of a plurality of enriched events:
measure a first delay between a near real-time (NRT) variable state pre-persistence time and a publishing time of an associated event;
measure a second delay between an NRT variable state post-persistence time and the NRT variable state pre-persistence time;
determine a delay latency from the first delay and the second delay;
record the delay latency; and
during an offline simulation process of the production process through execution of a machine-learning model, determine a simulation delay to apply to the plurality of enriched events, the simulation delay being based on the delay latency.

12. The computing system of claim 11, wherein the simulation delay includes a global constant delay for a set of enriched events and for a set of types of NRT variables.

13. The computing system of claim 11 or 12, wherein the simulation delay includes a constant delay for each enriched event type, the constant delay configured to be based on the recorded delay latency; and/or
the simulation delay includes an adaptive delay generated from a latency delay model.

14. The computing system of any one of claims 11 to 13, wherein the simulation delay is based on at least a first probabilistic expectation level and a second probabilistic expectation level of the measured first delay and the measured second delay.

15. The computing system of claim 14, wherein the first probabilistic expectation level is a 95th percentile rank (P95); and/or the second probabilistic expectation level is a 99th percentile rank (P99).
